# NEUE EUROPÄISCHE PATENTSCHRIFT

(11) **EP 1 567 314 B2**
(45) Veröffentlichungstag und Bekanntmachung des Hinweises auf die Entscheidung über den Einspruch: **25.05.2011**
(45) Hinweis auf die Patenterteilung: 07.03.2007
(21) Anmeldenummer: 03775213.6
(22) Anmeldetag: 22.10.2003
(51) Int. Cl.: B29C 45/16, A46D 3/00, A46B 5/02

(54) **Zahnbürstenkörper**
Toothbrush bodies
Corp de brosse à dents

(30) Priorität: 09.11.2002 DE 10252163
(43) Veröffentlichungstag der Anmeldung: 31.08.2005
(73) Patentinhaber: Braun GmbH, 61476 Kronberg (DE)
(72) Erfinder: STÖRKEL, Jens, 60433 Frankfurt am Main (DE); DE BUHR, Harald, 61476 Kronberg (DE); VOIGTMANN, Lutz, 61239 Ober-Mörlen (DE); HECKENTHALER, Roland, 55288 Gabsheim (DE)
(86) Internationale Anmeldenummer: PCT/EP2003/011683
(87) Internationale Veröffentlichungsnummer: WO 2004/043669

(56) Entgegenhaltungen:
- EP-A- 1 188 534
- EP-A1- 0 805 019
- WO-A-02/06034
- US-A- 4 330 578
- US-A- 4 330 587
- PATENT ABSTRACTS OF JAPAN vol. 1999, no. 08, 30. Juni 1999 (1999-06-30) & JP 11 075938 A (SHIN ETSU POLYMER CO LTD), 23. März 1999 (1999-03-23)

## Beschreibung

Die Erfindung betrifft einen Zahnbürstenkörper nach dem Oberbegriff des Anspruchs 1.

Bei derartigen Spritzlingen ist es bekannt, das Dekor mit seiner Rückseite auf die Oberfläche des Grundkörpers aufzubringen und anschließend mit einem klaren transparenten Kunststoff zu umspritzen. Danach ist das Dekor von einem Beobachter durch die transparente Umspritzung hindurch zu sehen.

Durch den hohen Spritzdruck und die hohe Temperatur des Kunststoffs der Umspritzung kann es während des Spritzvorgangs der Umspritzung an der Oberfläche der Sichtseite des Dekors zu Beschädigungen kommen.

Aus der US 4,330,578 ist ein transparenter Spritzling bekannt, der einen Grundkörper aufweist, der mit Tinte bedruckt ist und wobei die bedruckte Seite überspritzt ist.

Aus der EP 1 188 534 A2 ist ein Spritzling bekannt, der einen aus Kunststoff gespritzten Grundkörper aufweist, auf dessen Oberfläche ein Dekor flächig aufbringbar ist, dass durch einen zweiten Spritzvorgang von einer Umspritzung aus einem Kunststoff bedeckbar ist, wobei der Grundkörper aus einem transparenten und/oder opaken und/oder transluzenten Kunststoff besteht und das Dekor mit seiner Sichtseite auf der Oberfläche des Grundkörpers liegt. Hierbei ist das Dekor auf einer Folie aufgedruckt, die mit der Dekorseite an den Grundkörper zur Anlage gebracht wird. Damit ist das Dekor durch die Folienseite vor einer Beschädigung durch die nachfolgende Umspritzung geschützt.

Das Dokument WO0206034 offenbart einen Zahnbürstenkörper gemaß dem Oberbegriff des Anspruchs 1.

Aufgabe der Erfindung ist es daher einen Zahnbürstenkörper der eingangs genannten Art bereit zu stellen, bei dessen Umspritzung des Grundkörpers eine Beschädigung der Sichtseite des Dekors zumindest weitgehend vermieden wird und eine einfache Bedruckung möglich ist.

Diese Aufgabe wird durch einen Zahnbürstenkörper mit den Merkmalen des Anspruchs 1 gelöst.

Durch diese Anordnung wird die Sichtseite des Dekors während des Spritzvorgangs der Umspritzung durch den Grundkörper abgedeckt und somit gegen Beschädigungen geschützt. Die Rückseite ist wesentlich unempfindlicher. Deren Beschädigungen durch Spritzdruck und Temperaturbelastung haben zumindest weitgehend keinen Einfluß auf die Sichtseite des Dekors, so dass dessen dekorierende Wirkung nicht beeinträchtigt wird.

Der Kunststoff der Umspritzung kann undurchsichtig sein. Er kann aber auch ein transparenter und/oder opakter und/oder transluzenter Kunststoff sein.

Zur einfachen und sicheren Befestigung der Umspritzung am Grundkörper kann die Umspritzung einen oder mehrere dekorfreie Bereich des Grundkörpers mit Materialschluß bedecken, der durch das oberflächige Anschmelzen des Kunststoffs des Grundkörpers beim Umspritzvorgang durch den Kunststoff der Umspritzung bewirkt wird.

Bedeckt die Umspritzung formschlußlos den Grundkörper, so erfolgt eine Befestigung der Umspritzung am Grundkörper allein durch die Haftung des Materialschlusses, was zu einer größeren Freiheit in der Formgebung des Spritzlings führt.

Die Kunststoffe von Grundkörper und Umspritzung können unterschiedliche Härtegrade aufweisen.

Die dekorfreien Bereiche können zur materialschlüssigen Verbindung im Randbereich des Dekors 4 angeordnet sein.

Damit der Bereich des Dekors derart eingekapselt wird, daß sich in diesem Bereich keine Verunreinigungen in Spalte zwischen Grundkörper und Umspritzung hineinziehen können, kann die Umspritzung sich ganz oder teilweise über den Randbereich des Dekors hinaus über den Grundkörper erstrecken.

Eine andere Möglichkeit zur materialschlüssigen Verbindung besteht darin, daß die dekorfreien Bereiche in dem Bereich des Dekors angeordnet sind, wodurch auch bei großflächigen Dekors eine sichere Verbindung der Umspritzung mit dem Grundkörper erreichbar ist.

Soll die Verbindungssicherheit der Verbindung zwischen Grundkörper und Umspritzung weiter erhöht werden, so kann der Grundkörper in einem oder mehreren der dekorfreien Bereiche zu seiner Oberfläche hin offene Ausnehmungen aufweisen, die von dem Kunststoff der Umspritzung ausgefüllt sind, da dabei die Oberfläche der umspritzten dekorfreien Bereiche vergrößert wird.

Gleichzeitig kann dabei die Ausnehmung ein oder mehrere alpha-numerische Zeichen oder Symbole wie z.B. ein Firmenlogo darstellen.

Die das Dekor tragende Oberfläche des Grundkörpers kann entweder eben oder aber auch konvex gewölbt sein.

Um z.B. bei dem Aufdrucken des Dekors mittels eines Tampon-Stempels eine Beschädigung der verwendeten Werkzeuge zum Aufbringen des Dekors zu vermeiden, kann der das

Dekor umgebende Bereich der Oberfläche des Grundkörpers gegenüber der von dem Dekor bedeckten Fläche tieferliegend ausgebildet sein, was auf einfache Weise dadurch erreichbar ist, daß der das Dekor umgebende Bereich der Oberfläche des Grundkörpers konvex verrundet ausgebildet ist. Damit wird gleichzeitig eine Vergrößerung des umspritzbaren dekorfreien Bereichs erreicht.

Die konvexe Verrundung kann sich dabei in den äußeren Randbereich der das Dekor tragenden Oberfläche des Grundkörpers erstrecken.

Das Dekor kann in vielfältigster Weise ausgebildet sein. So kann das Dekor ein Einlegeteil oder eine Heißtransferfolie oder eine metallisierte Folie sein.

Das Dekor kann auch durch Drucken insbesondere durch Tampondruck oder Siebdruck oder Laserdruck oder Inkjetdruck auf die Oberfläche des Grundkörpers aufgebracht sein.

Zur Erzeugung eines komplizierten mehrschichtigen Bildes kann auf die Umspritzung ein weiteres Dekor aufgebracht sein, das von einer weiteren Umspritzung bedeckt ist, die einen oder mehrere von dem weiteren Dekor freie Bereiche der ersten Umspritzung mit Materialschluß zur ersten Umspritzung bedeckt.

Es ist aber auch möglich, daß nach jeder Umspritzung ein weiteres Dekor räumlich hinter einem bereits umspritzten Dekor aufgebracht und von einer weiteren Umspritzung bedeckt wird.

Ausführungsbeispiele der Erfindung sind in der Zeichnung dargestellt und werden im folgenden näher beschrieben. Es zeigen
- Fig. 1: einen Querschnitt eines ersten Ausführungsbeispiels eines Spritzlings
- Fig. 2: einen Querschnitt eines zweiten Ausführungsbeispiels eines Spritzlings
- Fig. 3: einen Querschnitt eines dritten Ausführungsbeispiels eines Spritzlings.

Die in den Figuren dargestellten Spritzlinge sind Zahnbürstenkörper.

Die dargestellten Spritzlinge besitzen einen Grundkörper 1, der in einem ersten Arbeitsgang aus einem transparenten Kunststoff durch Spritzen hergestellt wurde. Die nach oben gerichtete Oberfläche 2 des Grundkörpers 1 ist konvex gewölbt.

Auf die Oberfläche 2 ist durch Tampondruck ein Dekor 4 aufgedruckt, dessen Sichtseite 5 zur Oberfläche 2 des Grundkörpers 1 gerichtet und für einen Beobachter durch den transparenten Grundkörper 1 hindurchzusehen ist.

Da die Fläche des Dekors 4 kleiner als die Oberfläche 2 ist, ist auf der Oberfläche 2 ein das Dekor 4 umschließender dekorfreier Randbereich gebildet.

Für einen Umspritzvorgang wurde der Grundkörper 1 in ein Überspritzwerkzeug eingelegt, wozu der Grundkörper 1 an seiner umlaufenden, die Oberfläche 2 umschließenden Seitenwand mit einem zur Aufnahme in dem Überspritzwerkzeug dienenden umlaufenden Absatz 3 versehen ist.

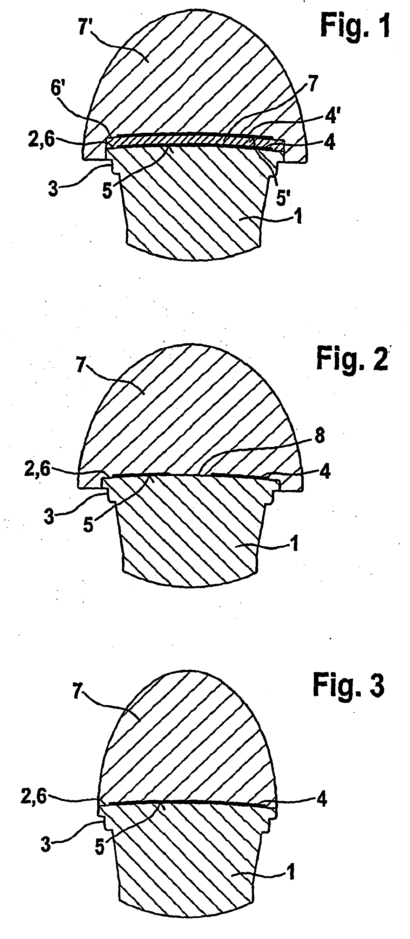

In dem Umspritzvorgang ist der Grundkörper 1, das Dekor 4 und der dekorfreie Randbereich 6 bedeckend mit einer Umspritzung 7 versehen worden. Diese Umspritzung 7 überdeckt auch in Fig. 2 einen weiteren dekorfreien Bereich 8 innerhalb des Bereichs des Dekors 4. Dort, wo die Umspritzung 7 den dekorfreien Randbereich 6 und den dekorfreien Bereich 8 bedeckt, ist durch den Umspritzvorgang ein Materialschluß zwischen den Materialen des Grundkörpers 1 und der Umspritzung 7 entstanden, durch den diese beiden Teile fest miteinander verbunden sind.

Bei dem Ausführungsbeispiel der Fig. 1 ist die Umspritzung 7 transparent und darauf über dem Dekor ein weiteres Dekor 4' durch Tampondruck mit seiner Sichtseite 5' zum Grundkörper 1 gerichtet aufgebracht und in einem weiteren Umspritzvorgang von einer weiteren Umspritzung 7' bedeckt worden. Auch hierbei ist das zweite Dekor 4' von einem dekorfreien Randbereich 6' der ersten Umspritzung umschlossen, wobei sich die weitere Umspritzung 7' auch über den weiteren Randbereich 6' erstreckt, so daß die weitere Umspritzung 7' mit der Umspritzung 7 durch Materialschluß der Materialen dieser beiden Teile miteinander verbunden ist.

Auch das weitere Dekor 4' ist durch den transparenten Grundkörper 1 und die transparente Umspritzung 7' für einen Beobachter zu sehen.

Bei den Ausführungsbeispielen der Figuren 1 und 2 erstreckt sich die Umspritzung 7 bzw. 7' über Randbereiche 6 bzw. 6' hinaus bis in den Bereich der Seitenwand, während bei dem Ausführungsbeispiel der Fig. 3 die Umspritzung 7 nur das Dekor 4 und den Randbereich 6 der Oberfläche 2 bedeckt.

## Patentansprüche

1. Zahnbürstenkörper, mit einem aus Kunststoff gespritzten Grundkörper auf dessen Oberfläche ein Dekor flächig aufgebracht ist, das durch einen zweiten Spritzvorgang von einer Umspritzung aus einem Kunststoff bedeckt ist, wobei der Grundkörper (1) aus einem transparenten und/oder opaken und/oder transluzenten Kunststoff besteht, **dadurch gekennzeichnet, dass** das Dekor (4) mit seiner Sichtseite (5) auf die Oberfläche (2) des Grundkörpers (1) aufliegt, wobei die das Dekor (4) tragende Oberfläche (2) des Grundkörpers (1) konvex gewölbt ist.

2. Zahnbürstenkörper nach Anspruch 1,
**dadurch gekennzeichnet,**
**daß** der Kunststoff der Umspritzung ein transparenter und/oder opaker und/oder transluzenter Kunststoff ist.

3. Zahnbürstenkörper nach einem der vorhergehenden Ansprüche,
**dadurch gekennzeichnet,**
**daß** die Umspritzung (7) einen oder mehrere dekorfreie Bereiche (6, 8) des Grundkörpers (1) mit Materialschluß bedeckt.

4. Zahnbürstenkörper nach Anspruch 3,
**dadurch gekennzeichnet,**
**daß** die Umspritzung (7) formschlußlos den Grundkörper (1) bedeckt.

5. Zahnbürstenkörper nach einem der vorhergehenden Ansprüche,
**dadurch gekennzeichnet,**
**daß** die Kunststoffe von Grundkörper und Umspritzung unterschiedliche Härtegrade aufweisen.

6. Zahnbürstenkörper nach einem der Ansprüche 4 bis 5,
**dadurch gekennzeichnet,**
**daß** die dekorfreien Bereiche (6) im Randbereich des Dekors (4) angeordnet sind.

7. Zahnbürstenkörper nach einem der Ansprüche 3 bis 6,
**dadurch gekennzeichnet,**
**daß** die Umspritzung (7) sich ganz oder teilweise über den Randbereich (6) des Dekors (4) hinaus über den Grundkörper (1) erstreckt.

8. Zahnbürstenkörper nach einem der Ansprüche 3 bis 7,
**dadurch gekennzeichnet,**
**daß** die dekorfreien Bereiche (8) in dem Bereich des Dekors (4) angeordnet sind.

9. Zahnbürstenkörper nach einem der Ansprüche 3 bis 8,
**dadurch gekennzeichnet,**
**daß** der Grundkörper in einem oder mehreren der dekorfreien Bereiche zu seiner Oberfläche hin offene Ausnehmungen aufweist, die von dem Kunststoff der Umspritzung ausgefüllt sind.

10. Zahnbürstenkörper nach Anspruch 9,
**dadurch gekennzeichnet,**
**daß** die Ausnehmung ein oder mehrere alpha-numerische Zeichen oder Symbole darstellt.

11. Zahnbürstenkörper nach einem der vorhergehenden Ansprüche,
**dadurch gekennzeichnet,**
**daß** der das Dekor (4) umgebende Bereich der Oberfläche (2) des Grundkörpers (1) gegenüber der von dem Dekor (4) bedeckten Fläche tieferliegend ausgebildet ist.

12. Zahnbürstenkörper nach Anspruch 11,
**dadurch gekennzeichnet,**
**daß** der das Dekor (4) umgebende Bereich der Oberfläche (2) des Grundkörpers (1) konvex verrundet ausgebildet ist.

13. Zahnbürstenkörper nach Anspruch 12,
**dadurch gekennzeichnet,**
**daß** die konvexe Verrundung sich in den äußeren Randbereich der das Dekor (4) tragenden Oberfläche (2) des Grundkörpers (1) erstreckt.

14. Zahnbürstenkörper nach einem der vorhergehenden Ansprüche,
**dadurch gekennzeichnet,**
**daß** das Dekor eine Heißtransferfolie oder eine metallisierte Folie ist.

15. Zahnbürstenkörper nach einem der Ansprüche 1 bis 14,
**dadurch gekennzeichnet,**
**daß** das Dekor (4) durch Drucken, insbesondere durch Tampondruck oder Siebdruck oder Laserdruck oder Inkjetdruck auf die Oberfläche (2) des Grundkörpers (1) aufgebracht ist.

16. Zahnbürstenkörper nach einem der vorhergehenden Ansprüche,
**dadurch gekennzeichnet,**
**daß** auf die Umspritzung (7) ein weiteres Dekor (4') aufgebracht ist, das von einer weiteren Umspritzung (7') bedeckt ist, die einen oder mehrere von dem weiteren Dekor (4') freie Bereiche (6') der ersten Umspritzung (7) mit Materialschluß zur ersten Umspritzung (7) bedeckt.

## Claims

1. Toothbrush body having a main body of injection-moulded plastic, to whose surface a decoration is applied two-dimensionally and is covered by a plastic overmoulding by means of a second injection moulding operation, the main body (1) consisting of a transparent and/or opaque and/or translucent plastic, **characterized in that** the decoration (4) rests with its visible side (5) on the surface (2) of the main body (1), the surface (2) of the main body (1) that carries the decoration (4) being curved convexly.

2. Toothbrush body according to Claim 1, **characterized in that** the plastic of the overmoulding is a transparent and/or opaque and/or translucent plastic.

3. Toothbrush body according to one of the preceding claims, **characterized in that** the overmoulding (7) covers one or more decoration-free regions (6, 8) of the main body (1), with a cohesive connection.

4. Toothbrush body according to Claim 3, **characterized in that** the overmoulding (7) covers the main body (1) without a form fit.

5. Toothbrush body according to one of the preceding claims, **characterized in that** the plastics of the main body and overmoulding have different levels of hardness.

6. Toothbrush body according to one of Claims 4 to 5, **characterized in that** the decoration-free regions (6) are arranged in the edge region of the decoration (4).

7. Toothbrush body according to one of Claims 3 to 6, **characterized in that** the overmoulding (7) extends over the main body (1) wholly or partly beyond the edge region (6) of the decoration (4).

8. Toothbrush body according to one of Claims 3 to 7, **characterized in that** the decoration-free regions (8) are arranged in the region of the decoration (4).

9. Toothbrush body according to one of Claims 3 to 8, **characterized in that**, in one or more of the decoration-free regions, the main body has recesses that are open towards its surface, which are filled by the plastic of the overmoulding.

10. Toothbrush body according to Claim 9, **characterized in that** the recess represents one or more alphanumeric characters or symbols.

11. Toothbrush body according to one of the preceding claims, **characterized in that** the region of the surface (2) of the main body (1) that surrounds the decoration (4) is designed to be located more deeply than the area covered by the decoration (4).

12. Toothbrush body according to Claim 11, **characterized in that** the region of the surface (2) of the main body (1) that surrounds the decoration (4) is rounded convexly.

13. Toothbrush body according to Claim 12, **characterized in that** the convex rounding extends into the outer edge region of the surface (2) of the main body (1) that carries the decoration (4).

14. Toothbrush body according to one of the preceding claims, **characterized in that** the decoration is a hot transfer film or a metallized film.

15. Toothbrush body according to one of Claims 1 to 14, **characterized in that** the decoration (4) is applied to the surface (2) of the main body (1) by means of printing, in particular by means of pad printing or screen printing or laser printing or inkjet printing.

16. Toothbrush body according to one of the preceding claims, **characterized in that** a further decoration (4') is applied to the overmoulding (7) and is covered by a further overmoulding (7'), which covers one or more regions (6') of the first overmoulding (7) that are free of the further decoration (4'), with a cohesive connection to the first overmoulding (7).

## Revendications

1. Corps de brosse à dents, comprenant un corps de base moulé par injection de plastique sur la surface duquel est appliquée une décoration superficielle qui est recouverte par une deuxième opération d'injection d'un enrobage de plastique injecté, le corps de base (1) se composant d'un plastique transparent et/ou opaque et/ou translucide, **caractérisé en ce que** la décoration (4) s'applique avec son côté visible (5) sur la surface du corps de base (1), la surface (2) du corps de base (1) portant la décoration (4) ayant une courbure convexe.

2. Corps de brosse à dents selon la revendication 1,
**caractérisé en ce que**
le plastique pour l'enrobage par injection est un plastique transparent et/ou opaque et/ou translucide.

3. Corps de brosse à dents selon l'une quelconque des revendications précédentes,
**caractérisé en ce que**
l'enrobage par injection (7) recouvre une ou plusieurs régions sans décoration (6, 8) du corps de base (1) par liaison de matière.

4. Corps de brosse à dents selon la revendication 3,
**caractérisé en ce que**
l'enrobage par injection (7) recouvre le corps de base (1) sans liaison de forme.

5. Corps de brosse à dents selon l'une quelconque des revendications précédentes,
**caractérisé en ce que**
les plastiques du corps de base et de l'enrobage par injection présentent des degrés de dureté différents.

6. Corps de brosse à dents selon l'une quelconque des revendications 4 à 5,
**caractérisé en ce que**
les régions sans décoration (6) sont disposées dans la région du bord de la décoration (4).

7. Corps de brosse à dents selon l'une quelconque des revendications 3 à 6,
**caractérisé en ce que**
l'enrobage par injection (7) s'étend complètement ou partiellement au-delà de la région de bord (6) de la décoration (4) sur le corps de base (1).

8. Corps de brosse à dents selon l'une quelconque des revendications 3 à 7,
**caractérisé en ce que**
les régions sans décoration (8) sont disposées dans la région de la décoration (4).

9. Corps de brosse à dents selon l'une quelconque des revendications 3 à 8,
**caractérisé en ce que**
le corps de base présente dans une ou plusieurs des régions sans décoration des évidements ouverts vers sa surface, qui sont remplis du plastique d'enrobage par injection.

10. Corps de brosse à dents selon la revendication 9,
**caractérisé en ce que**
l'évidement constitue un ou plusieurs signes ou symboles alphanumériques.

11. Corps de brosse à dents selon l'une quelconque des revendications précédentes,
**caractérisé en ce que**
la région de la surface (2) du corps de base (1) entourant la décoration (4) est réalisée plus profondément que la surface recouvrant la décoration (4).

12. Corps de brosse à dents selon la revendication 11,
**caractérisé en ce que**
la région de la surface (2) du corps de base (1) entourant la décoration (4) est réalisée sous forme arrondie convexe.

13. Corps de brosse à dents selon la revendication 12,
**caractérisé en ce que**
l'arrondi convexe s'étend dans la région de bord extérieure de la surface (2) du corps de base (1) portant la décoration (4).

14. Corps de brosse à dents selon l'une quelconque des revendications précédentes,
**caractérisé en ce que**
la décoration est un film à transfert thermique ou un film métallisé.

15. Corps de brosse à dents selon l'une quelconque des revendications 1 à 14,
**caractérisé en ce que**
la décoration (4) est appliquée par impression, notamment par impression au tampon ou par sérigraphie ou par impression laser ou par impression à jet d'encre sur la surface (2) du corps de base (1).

16. Corps de brosse à dents selon l'une quelconque des revendications précédentes,
**caractérisé en ce que**
l'on applique sur l'enrobage par injection (7) une autre décoration (4') qui est recouverte par un autre enrobage par injection (7') qui recouvre une ou plusieurs régions (6') sans l'autre décoration (4') du premier enrobage (7) par liaison de matière avec le premier enrobage par injection (7).
